# EUROPEAN PATENT APPLICATION

(11) **EP 1 703 734 A1**
(43) Date of publication of application: **20.09.2006**
(21) Application number: 05005594.6
(22) Date of filing: 15.03.2005
(51) Int. Cl.: H04N 7/26, H04N 7/46

(54) **Apparatus and method for producing and processing a picture data stream**

(71) Applicant: Nero AG, 76307 Karlsbad (DE)
(72) Inventor: Laaksonheimo, Juha, 33720 Tampere (FI)
(74) Representative: Zinkler, Franz

(57) **Abstract**

A virtual size information is attached to encoded picture data when generating the encoded picture data for example by a transcoder. The virtual size information is used for resizing a picture or a video having a sequence of pictures to increase the subjective quality of the displayed information. The virtual size information is generated on the encoder-side and transmitted to the decoder-side and used by the resizer to resize the transmitted information to a degree, which results in an optimum subjective quality determined by a trade-off between interpolation artefacts and picture size.

## Description

The present invention is in the field of video encoding/decoding and, in particular, suitable for scalable video coding schemes.

Video sequences consisting of several subsequent frames or "single-pictures", or, alternatively, one or more still pictures can be acquired with any desired resolution and accuracy. In general, the resolution and accuracy for acquiring a picture is determined by, for example, a digital camera, a camcorder, or computer equipment for generating virtual scenes.

In this context, the resolution is defined by the number of pixels of a picture. When the picture has a high number of pixels, it has a high resolution and, accordingly, a large size, when the area occupied by a pixel on a display screen is set to a certain value. The accuracy of a picture or, particularly, the accuracy of a pixel is defined by the number of bits required to encode this pixel. Generally, a high number of bits per pixel results in a higher accuracy for the pixel, or in a higher number of values representable by the pixels.

As a simple example, providing one bit per pixel means, when no compression algorithm is used that the pixel can only be white or black. It is clear that providing for example 3 bits per pixel enhances the accuracy of this pixel and, therefore, the picture quality, since the pixel can, for example, have one of 8 different grey values or colour values. Generally, the pixel accuracy or the total bit per pixel value is determined by a quantizer in the picture encoder.

It is to be noted here that a picture or video encoder/decoder scheme can be based on MPEG 4 or H.264/AVC. Naturally, several picture encoding/decoding schemes are also known in the context of JPEG. All these encoders have in common that the picture or a sequence of pictures are compressed to reduce redundancy in the picture file. A good way to do this is the application of motion-compensated prediction, which is known in the art. Additionally, most encoding schemes also rely on a lossy compression scheme, which is, in general, a quantization of - in the context of MPEG-4 - block-based DCT coefficients. Naturally, a large quantizer step size results in lower quantized values, which can be represented by a smaller number of bits compared to quantized values obtained by a small quantizer step size. Such a small quantizer step size results in a higher range of quantized values so that a higher number of bits are required for representing them. In particular, when a subsequent entropy encoding of quantized values is used, one can state in general that smaller values result in a higher coding gain compared to higher values.

As stated above, it is possible to acquire pictures with any desired resolution (size) and accuracy (bits per pixel). Instead of the large progress in encoder compression gains, it is, of course, not possible to encode a large and very accurate picture and to simultaneously obtain a very small bit rate being small enough for a low-bandwidth transmission channel.

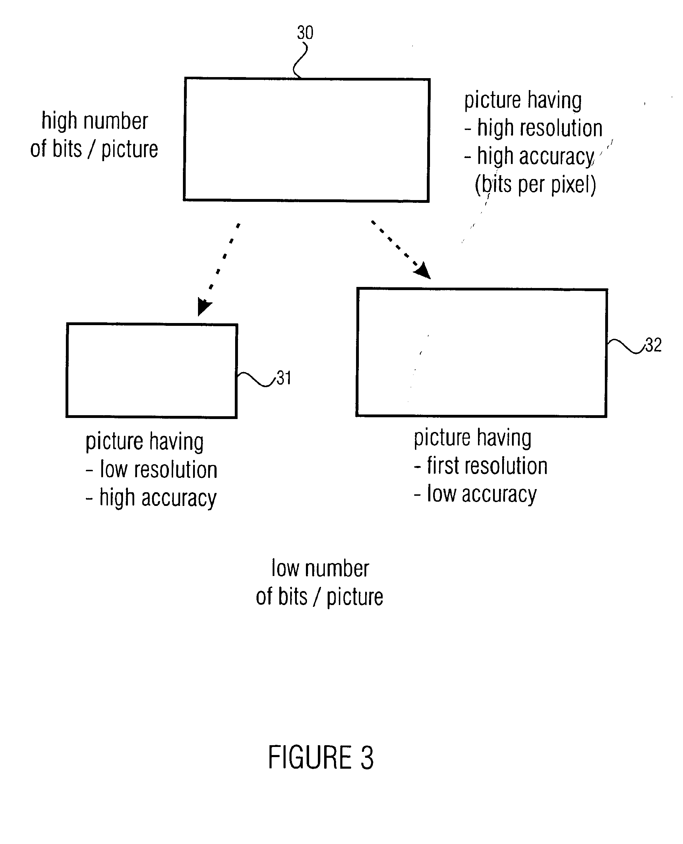

In this context, one has two general possibilities to reduce the number of bits per picture so that a picture can be transmitted via a transmission channel having a limited bandwidth. To this end, reference is made to Fig. 3. A large picture 30 having a high accuracy is shown. It has been determined that, instead of the most advanced picture encoding algorithms, the output bit rate of picture 30 is too high so that a transmission of the picture 30 over a certain bandwidth-limited channel is not possible. The first possibility to reduce the number of bits required to encode the picture 30 is shown at the left hand side of Fig. 3 at picture 31. Picture 31 is different from picture 30 in that it has a lower resolution, i.e., a lower number of bits resulting in a picture having a smaller size as shown in Fig. 3. Nevertheless, in the Fig. 3 example, the number of bits per pixel in picture 31 has not been changed with respect to picture 30.

Another possibility is shown at the right hand side in Fig. 3 at picture 32. Picture 32 has the same number of pixels as picture 30, resulting in that picture 32 is equally sized to picture 30. To reduce the number of bits required for representing the picture, the accuracy, i.e., the bits per pixel have been reduced in picture 32.

For reducing the resolution to obtain picture 31, one can use more or less sophisticated decimation filters such as filters combining two adjacent pixels in a row or in a column so that the resulting picture 31 is smaller than the original picture 30.

For reducing pixel accuracy, one can increase a quantizer step size in a picture encoder or simply delete a certain number of low significant bits per pixel until a certain bit rate is achieved.

Pictures 31 and 32 both have a certain subjective quality. When one looks at picture 31, one will see the very high pixel accuracy. However, the subjective impression is affected by the small size of picture 31. When one, however, looks at picture 32, one will be satisfied with the large size of this picture. Nevertheless, the reduced accuracy of the bits will forbid a fully satisfying subjective impression.

Naturally, all combinations of the two general possibilities shown in Fig. 3 are possible. One can reduce the resolution and one can reduce the accuracy, i.e., the number of bits per pixel to obtain a target bit rate.

The decisions shown in Fig. 3 have to be taken, when a video sequence is processed, for example by a transcoder, whose input is connected to a high bandwidth transmission channel, and whose output is connected to a low bandwidth transmission channel. In this situation, the transcoder has to do something with the picture or the sequence of pictures to fulfil the low bandwidth requirements of the low bandwidth channel.

The easiest way would be to select the target resolution identical to the source resolution. In such a case, only the bit rate needs to be decided. This procedure would correspond to the right alternative of Fig. 3 illustrated by picture 32.

When, however, the bit rate of the target, i.e., the low-bandwidth channel or low-bandwidth replay device is too low so that the accuracy would be affected too much, changing the resolution by decimating, i.e., using the first alternative in Fig. 3 is a choice. This is particularly the fact, when the replay display is smaller than the size of the original picture 30.

In many cases, however, the replay display is not small enough that a decimation from the size of picture 30 to the size of picture 31 will result in the required low number of bits per picture. In this case, in order to not impair the pixel accuracy too much, a resolution reduction to a target resolution has to be performed, which is normally smaller than the size of the intended replay device.

Naturally, this procedure is disadvantageous in that sometimes pictures become too small so that the very smallness of the picture dominates - and destroys - the subjective picture quality, which impression can not be compensated for by a high pixel accuracy.

It is the object of the present invention to provide an encoding/decoding concept which results in a better subjective quality while keeping a bit rate, which is low enough for the encoded data stream to be transmitted over a transmission channel having a limited bandwidth.

This object is achieved by an apparatus for producing a data stream in accordance with claim 1, an apparatus for processing a data stream in accordance with claim 8, a method of producing a data stream in accordance with claim 12, a method of processing a data stream in accordance with claim 13, a computer program in accordance with claim 14, a data stream in accordance with claim 15, or a storage device in accordance with claim 17.

The present invention is based on the finding that the subjective quality of the displayed picture can be enhanced by resizing the picture by a certain degree on the decoder/display side of the encoding/decoding scheme. In this connection, resizing does not mean a simple zoom operation, which does not influence the resolution of this picture but only influences the area, a certain pixel occupies on a display screen. Instead, the resizing operation results in a higher resolution of the displayed picture or the sequence of displayed pictures. The pixels not included in the transmitted picture but included in the displayed picture are calculated before displaying the picture using information transmitted from an encoder to the decoder and, in particular, are derived from the transmitted pixels for example by interpolation. It has been discovered, however, that resizing for example by interpolation can not be performed by an unlimited degree. The subjective quality of a picture is only better than the subjective quality of the non-resized picture within a certain resizing range. The resizing range or, stated in other words, the amount of resizing giving an optimum subjective quality depends on a high number of different factors. These factors include the picture itself, the pixel accuracy of the low resolution picture, encoding algorithms used for encoding the low resolution picture and characteristics of the display device intended to display the resized picture. In view of this, the complicated interdependence between the above example factors makes it impossible to prescribe or predefine a certain resizing amount valid for all combinations of picture data resolution/accuracy and transmission/display settings.

In accordance with the present invention, resizing information is supplied, which is preferably generated by the user producing the data stream. The user or generator of the data stream having the reduced picture resolution can easily determine the optimum resizing information by, for example, performing some empirical tests. Although it might look as a heavy burden at a first glance, the determination of the optimum resizing parameter only has to be performed once for a similar picture material and similar encoder/decoder/display settings.

Supplying the optimum resizing information on the encoder-side and transmitting this resizing information preferably together with the encoded picture data to a decoder results in an optimum achievable subjective quality on decoder/display side. Thus, the inventive supply of the resizing information in addition to the encoded picture data helps to avoid any surprising subjective quality degradations incurred by a resizing operation, which increases the resolution too much. Such a situation can occur, when a display device is set to interpolate each incoming picture irrespective of the resolution of the incoming picture to the resolution of the display device so that a full-size video reproduction is obtained. Such a situation is especially disadvantageous, because the viewer does not appreciate the high size, but is annoyed by a quite shady picture showing too much interpolation artefacts.

On the other hand, the inventive picture data adaptive signalling of the resizing information reduces situations, which can occur, when the decoder operates too conservative. A straightforward procedure would be to do no resize at all. It is, however, clear that subjective quality enhancement possibilities are completely given away. This situation also occurs, when a default resizing degree of, for example 5 %, is fixed in a display device. In this case, the user can see a slight improvement but will not profit from the full quality, which would have been possible and which is signalled in accordance with the present invention.

In the field of video encoding, there is a highly competitive market and, in addition, the restriction of more and more decreasing available transmission bandwidth resources because of the extremely growing need for digital transmission channels. In view of this, the ultimate goal - with respect to the scarce transmission resources - is to reduce bandwidth as far as possible. On the other hand, however, a product can only survive on the market place, when it has an improved quality compared to products of the competitors. An advantage over products of the competitors can be, of course, achieved, when one can say that one has the same bandwidth needs as the competitor's product but one has a better product quality than the competitor.

The only price to be paid for the optimum subjective quality obtained by the present invention is, on the encoder-side, the supply of the resizing information and, on the decoder-side an interpolator controllable by the resizing information. Additionally, the resizing information has to be transmitted. Since this information can be transmitted with a very low number of bits such as three bits for signalling eight percentage ratios between an increase of 0 % to 100 %, the additional need of channel capacity can be neglected. Additionally, any encoder-related efforts do not matter, since transmission efficiency and subjective display quality are the issues that count in a highly competitive market. Regarding the additional interpolator in the display device, it is to be noted here that display devices or decoder devices that do not have such interpolators, can easily be upgraded. For other display devices/decoders, no additional effort is caused by such an additional interpolator, since these devices already include such a device operating under a predetermined non-adaptive or user-initiated setting.

Preferred embodiments of the present invention are subsequently explained with respect to the accompanying drawings, in which:
- Fig. 1: shows an overview over a data processing scheme including the apparatus for producing a data stream on the encoder-side and the apparatus for processing a data stream on the decoder-side;
- Fig. 2a: a preferred embodiment of the apparatus for producing on the encoder-side;
- Fig. 2b: a preferred embodiment of the apparatus for processing on the decoder-side;
- Fig. 3: a schematic representation for reducing the bit rate for transmitting one or more pictures over a transmission channel having a limited bandwidth; and
- Fig. 4: a schematic representation of subjective quality versus resizing degree.

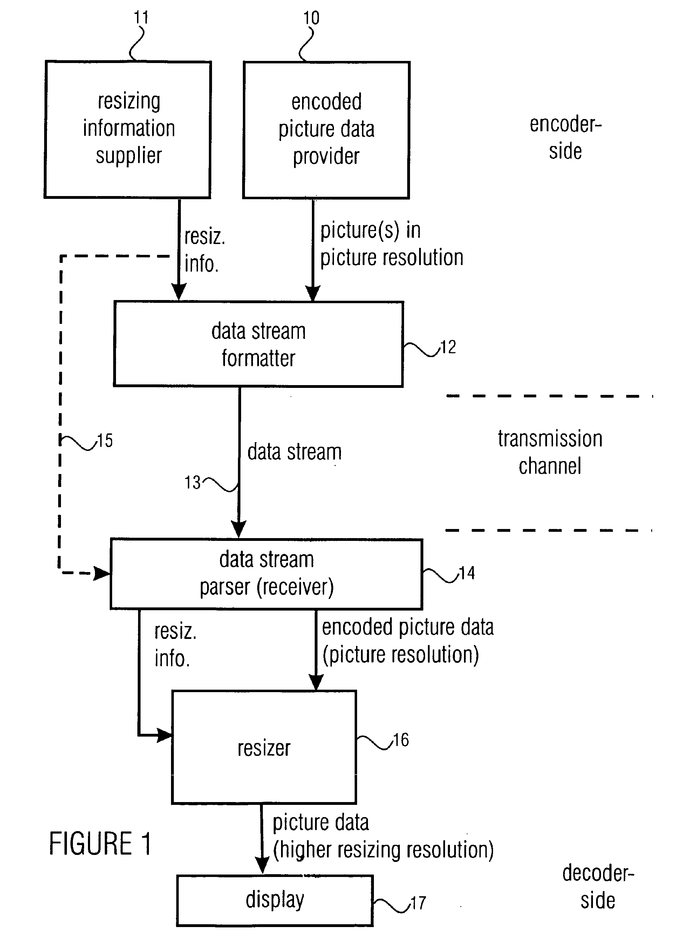

The system in Fig. 1 includes, on the encoder-side, a provider 10 for providing encoded picture data. A picture represented by the encoded picture data has a picture resolution defined by a number of pixels included in the picture. The picture in the picture resolution generated by the picture provider 10 can be, for example, picture 31 of Fig. 3. In accordance with the present invention, the apparatus for producing a data stream having encoded picture data representing a single picture or a plurality of pictures also includes a resizing information supplier 11. The resizing information supplier 11 is operative to supply resizing information. The resizing information define a resizing resolution of the picture, when replaying the picture, wherein the resizing resolution is higher than the picture resolution.

Preferably, the resizing information and the encoded picture data are input into a data stream formatter 12. The device 12 forms a data stream and transmits the data stream via a transmission channel 13 to a data stream parser 14. The data stream parser 14 works as a receiver for receiving the data stream and the resizing information.

As outlined by a dashed line 15, the resizing information does not necessarily have to be transmitted together with the encoded picture data within a single data stream. Instead, the resulting information can also be transmitted via a separate transmission channel. Such an embodiment is preferable in cases, in which the transmission format of a data stream cannot be changed. Then, the resulting information can, for example, be transmitted via an additional data packet over the same transmission channel or via a completely separate transmission channel. In this case, the resulting information preferably includes an identification of the encoded picture data so that the decoder-side apparatus can allocate the correct resizing information to a certain data stream having encoded picture data.

The apparatus for processing the data stream on the decoder-side further includes a resizer 16 for resizing a picture in response to resizing information supplied by the receiver 14. The resizer 16 outputs a resized picture based on the picture having the picture resolution. In contrast to the picture having the picture resolution included in the data stream, the resized picture has a higher number of pixels than the number of pixels of the corresponding picture in the data stream transmitted via channel 13. The picture data generated by the resizer can then be input into a display device 17 to give a user of the display maximum subjective quality video. It is clear that the apparatus for processing including element 14 and 16 does not necessarily have to be included within the display 17 such as a monitor or a television set. Instead, the resizer can be a software-plug-in for a general purpose processor or an application program for application-specific processors which are, for example, located on a graphics board of a display drive device.

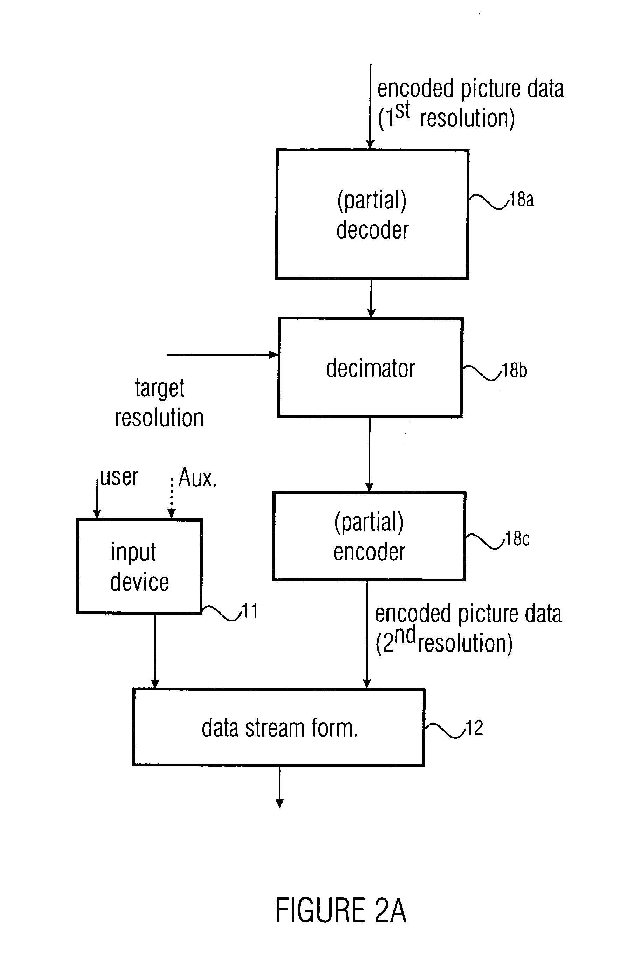

Fig. 2a shows a preferred embodiment of the apparatus for producing on the encoder-side of Fig. 1. The device in Fig. 2a is operative to work as a transcoder receiving encoded picture data having a first resolution. These encoded picture data having the first resolution are input into a transcoder having a (partial) decoder 18a, a decimator 18b, and a (partial) encoder 18c. The transcoder outputs encoded picture data being in a second resolution, which is similar to a target resolution provided as an input to the decimator 18b. The resizing information supplier 11 is implemented in the Fig. 2a embodiment as an input device having an user input to receive the resizing information.

Alternatively or additionally, the input device 11 also includes an auxiliary input. This input is operative to receive estimated resizing information adaptively derived by certain determination rules from the encoded picture data in the second resolution or the first resolution. As outlined above, there is a quite complicated interdependence between several factors to arrive at an optimum resolution. Nevertheless, it has been found out that the main factors are a target resolution or, preferably, target resolution (second resolution), source resolution (first resolution) and pixel accuracy. Thus, a quite good estimation value for the resizing operation can be automatically generated and input via the auxiliary input to the resizing information supplier 11. The resizing information is such that it results, when controlling the resizer 16 (Fig. 1), in a higher resolution of the resized picture. Preferably, the resizing information is such that the maximum resizing degree is 100 % and, preferably, 75 %. It has been found out that for most cases a resizing of a picture by more than 75 % will result in a subjective quality degradation not tolerable any more.

The data stream formatter 12 is implemented as a transmitter when a streaming mode is set. Preferably, the resizing information is transmitted ahead of the encoded picture data. In case of a file storing mode, the data stream formatter 12 is operative to write a video file into a storage device. In this case, it is preferred to write the resizing information together with the encoded video data into a single file.

As outlined above, Fig. 2a describes a transcoder device for transcoding encoded picture data from a first resolution into a second resolution, which is smaller than the first resolution. Depending on the selected coding algorithm, the encoded picture data do not have to be fully decoded for performing decimation by the decimator. Instead, a decimation can also be performed in the DCT domain of a transform-based video coding algorithm. The partial decoder 18a performs all decoding steps necessary to arrive in the DCT domain, but does not perform a final transform. Analogously, the partial encoder 18c also does not have to perform the initial transform but can start its encoding operations based on the (decimated) DCT coefficients.

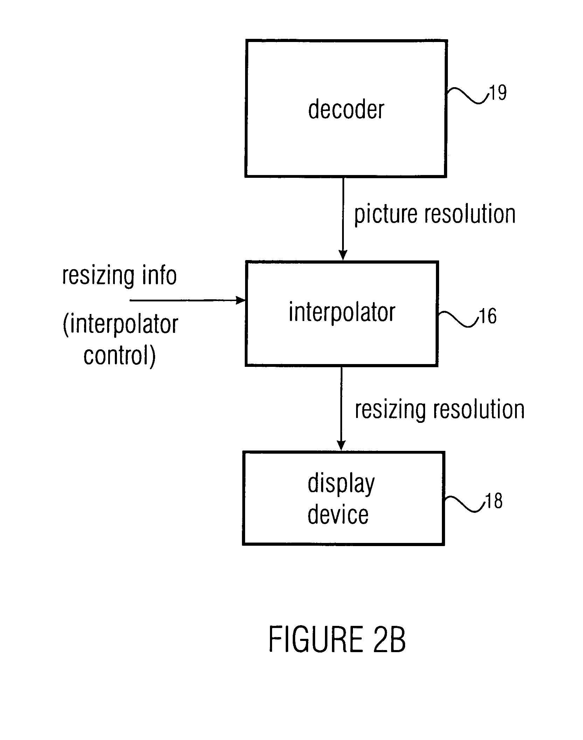

Fig. 2b illustrates a preferred embodiment of an inventive apparatus for processing a data stream having encoded data and resizing information. The encoded data are input into a decoder 19. The decoded picture data, which are in the picture resolution are input into the resizer 16, which preferably includes an interpolator. The interpolator receives, as a further input, the resizing information for performing an interpolator control. In this embodiment, the resizing information define the resolution at the output of the interpolator 16 in absolute terms or in relative terms with respect to the picture resolution of a picture input into the interpolator. The interpolator output can then be displayed on a display device 18.

Although Fig. 2b shows the situation of a complete decoding operation before interpolating, it is clear that, depending on certain coding algorithms, the interpolation can be performed on other data than final pixel data. Such "other data" can, for example, be DCT coefficients for any other intermediate values in a decoder.

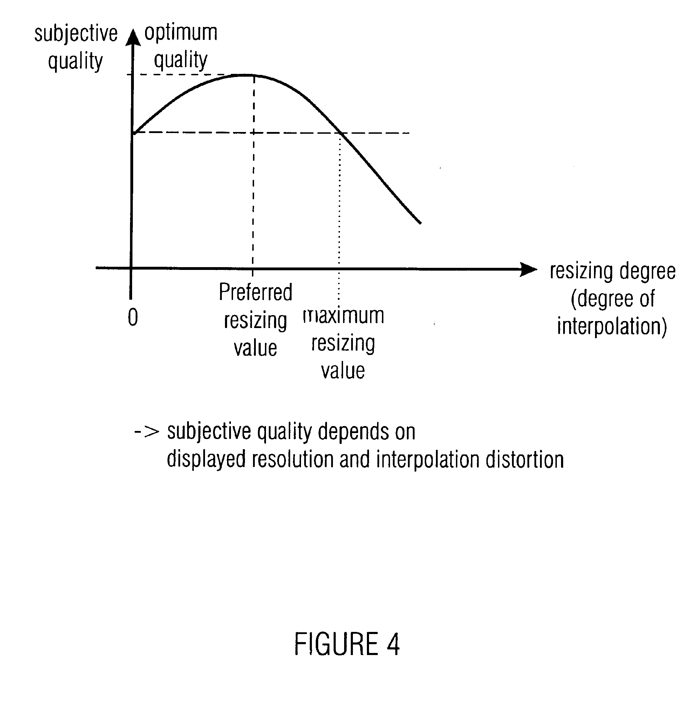

Subsequently, reference is made to Fig. 4 showing a schematic diagram interrelating the subjective quality and the resizing degree, which is preferably a degree of interpolation of the interpolator 16 of Fig. 2b. In the context of the present invention, the subjective picture quality depends on the display resolution, i.e., the size of the displayed picture, and on the introduced interpolation distortion. As it is known in the art, an interpolator calculates a value between two actually given values based on a certain interpolation rule. One can perform one-sided interpolation also known as spline interpolation or prediction, or one can also perform a two-sided interpolation, in which pixels to the left and to the right of the to be interpolated pixel value are used for calculating this value. The difference between the interpolated value and the pixel value, which was originally there in a high resolution source pixel is defined as the interpolation distortion.

Naturally, the interpolation distortion included in a picture increases more and more, when the interpolation degree increases. This increase of interpolation distortion results in a degradation of subjective quality.

On the other hand, the interpolation results in a larger size of the picture, which leads to an increase of subjective quality. When both contradicting influences are added together, one will obtain a curve such as the Fig. 4 curve. This curve has an increasing branch ending at an optimum quality point. This optimum quality point has an associated resizing value, which is the preferred resizing value.

When the resizing degree is increased over the resizing value, then the optimum quality decreases and reaches the original subjective quality at a certain value corresponding to a resizing value, which should be the maximum resizing value. When the resizing degree is increased over the maximum resizing value, the whole interpolation was not worth doing, since the result is worse than the initial (small) picture without any additional processing. In view of this, it is preferred to select the resizing value as a value smaller than the maximum resizing value.

Preferably, the preferred resizing value resulting in the maximum of the subjective quality is determined and entered, as an additional information, into the data stream having the encoded data. Preferably, when the resizing information is not signalled separately from the encoded picture data, reserved fields provided in each standardized transmission format, which are reserved for "future application" can be used for entering the resizing information indicating the degree of resizing intended by the user.

Inventively, the resizing information or "virtual size" information is added to the video information so that a player uses such virtual size as the preferred playback resolution size for the file or stream coming from a streaming server. So it is the choice of the creator of the stream/file to define the best virtual size, for example based on the Fig. 4 diagram.

The present invention is especially suitable for not doing playback in full screen. Then, the inventive device allows to scale the displayed picture to a pre-defined higher resolution instead of an original small or "stamp-sized" image. A predefined virtual size gives an impression of a better quality video. The inventive transmission of the virtual size, therefore, also obviates the need to adjust a replay size from the player itself, since the player is automatically adjusted by the transmitted resizing information.

A preferred application of the invention is in a browser plug-in like http://trailers.divx.com/plugin/index.html. For streaming purposes etc., the author can encode the video with a desired virtual size, and the player plug-in would automatically scale it to the resolution the author of the stream intended.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Apparatus for producing a data stream having encoded picture data representing a single picture or a plurality of pictures, comprising:
a provider (10) for providing the encoded picture data, a picture represented by the encoded picture data having a picture resolution defined by a number of pixels included in the picture; and
a resizing information supplier (11) for supplying resizing information, the resizing information defining a resizing resolution of the picture when replaying the picture, the resizing resolution being higher than the picture resolution.

2. Apparatus in accordance with claim 1,
in which the provider (10) is a transcoder for transcoding an input data stream having a picture in a first resolution into the encoded picture data having a second resolution as the picture resolution, the second resolution being smaller than the first resolution, and
in which the resizing information supplier (11) is operative to supply the resizing information such that the resizing resolution is higher than the second resolution and smaller than or equal to the first resolution.

3. Apparatus in accordance with claims 1 or 2,
in which the resizing information supplier (11) is operative to receive a user input and to generate the resizing information.

4. Apparatus in accordance with one of the preceding claims, in which the resizing information supplier is operative to determine the resizing information based on a picture resolution, a pixel accuracy, an information content in the encoded picture data, and/or characteristics of a display device for replaying the resized picture.

5. Apparatus in accordance with one of the preceding claims, in which the resizing information supplier is operative to supply the resizing information so that the resizing resolution is lower than a doubled picture resolution.

6. Apparatus in accordance with one of the preceding claims, further comprising a data stream formatter (12) for attaching the resizing information to the encoded picture data to obtain an output data stream.

7. Apparatus in accordance with claim 2, in which a number of bits per pixel value for a picture in the second resolution is equal to a number of bits per pixel value for a picture in the first resolution.

8. Apparatus for processing a data stream having encoded picture data representing a single picture or a plurality of pictures, comprising:
a receiver (14) for receiving the data stream and resizing information, the resizing information defining a resizing resolution of the picture when replaying the picture, the resizing resolution being higher than a picture resolution of a picture in the encoded picture data; and
a resizer (16) for resizing a picture in response to the resizing information to obtain a resized picture based on the picture having a picture resolution,
wherein a number of pixels of the resized picture is higher than a number of pixels of the corresponding picture in the picture resolution.

9. Apparatus in accordance with claim 8, in which the resizer (16) includes an interpolator, the interpolator having a controllable interpolation ratio,
in which the resizing information includes an interpolator control information, and
in which the receiver is operative to input the resizing information into the interpolator to set the interpolation ratio to a value determined by the interpolator control information.

10. Apparatus in accordance with claim 8 or claim 9, in which the resizer (16) is operative to receive, from a decoder for decoding the encoded picture data, a decoded picture or a plurality of decoded pictures having a number of decoded pixels defining the picture resolution; and
in which the resizer (16) if further operative to interpolate the decoded picture or the plurality of decoded pictures using the decoded pixels to obtain a resized picture or a plurality of resized pictures.

11. Apparatus in accordance with claim 10, further comprising an active X controller for controlling the processing apparatus when receiving the encoded data stream via the internet.

12. Method of producing a data stream having encoded picture data representing a single picture or a plurality of pictures, comprising:
providing (10) the encoded picture data, a picture represented by the encoded picture data having a picture resolution defined by a number of pixels included in the picture; and
supplying (11) resizing information, the resizing information defining a resizing resolution of the picture when replaying the picture, the resizing resolution being higher than the picture resolution.

13. Method of processing a data stream having encoded picture data representing a single picture or a plurality of pictures, comprising:
receiving (14) the data stream and resizing information, the resizing information defining a resizing resolution of the picture when replaying the picture, the resizing resolution being higher than a picture resolution of a picture in the encoded picture data; and
resizing (16) a picture in response to the resizing information to obtain a resized picture based on the picture having a picture resolution,
wherein a number of pixels of the resized picture is higher than a number of pixels of the corresponding picture in the picture resolution.

14. Computer program having a program code for performing the method in accordance with claim 12 or in accordance with claim 13, when the computer program runs on a computer.

15. Data file or stream having encoded picture data representing a picture or a plurality of pictures, a picture represented by the encoded picture data having a picture resolution defined by a number of pixels included in the picture, and having resizing information, the resizing information defining a resizing resolution of a picture when replaying the picture, the resizing resolution being higher than the picture resolution.

16. Data file or stream in accordance with claim 15 for controlling an apparatus for processing in accordance with claim 8, when the data stream or file is input into the apparatus for processing.

17. Storage device having stored thereon a data stream or file in accordance with claim 15.
